# EUROPÄISCHE PATENTSCHRIFT

(11) **EP 1 041 318 B1**
(45) Veröffentlichungstag und Bekanntmachung des Hinweises auf die Patenterteilung: **17.11.2004**
(21) Anmeldenummer: 00103510.4
(22) Anmeldetag: 18.02.2000
(51) Int. Cl.: F16J 15/32

(54) **Dichtring**
Sealing ring
Bague d'étanchéité

(30) Priorität: 01.04.1999 DE 19914921
(43) Veröffentlichungstag der Anmeldung: 04.10.2000
(73) Patentinhaber: Carl Freudenberg KG, 69469 Weinheim (DE)
(72) Erfinder: Pataille, Gilbert, 52200 Corlee (FR)

(56) Entgegenhaltungen:
- DE-A- 3 309 538
- US-A- 5 032 335

## Beschreibung

### Technisches Gebiet

Die Erfindung betrifft einen Dichtring, umfassend einen Stützring aus zähhartem Werkstoff und einen Lippenring aus PTFE, wobei der Lippenring einen Halteabschnitt und einen Dichtabschnitt aufweist und wobei der Halteabschnitt durch eine Zwischenschicht aus polymerem Werkstoff mit dem Stützring verbunden ist.

### Stand der Technik

Ein solcher Dichtring ist aus der DE 33 09 538 C2 bekannt. Der Dichtring ist für sich drehende Wellen oder für hin- und hergehende Stangen vorgesehen, wobei der Halteabschnitt und der Dichtabschnitt des Lippenrings materialeinheitlich ausgebildet sind. Der gesamte Lippenring besteht aus einem übereinstimmenden PTFE-Werkstoff.

### Darstellung der Erfindung

Der Erfindung liegt die Aufgabe zugrunde, einen Dichtring der eingangs genannten Art derart weiterzuentwickeln, daß seine Herstellung vereinfacht wird und der Dichtring bessere Gebrauchseigenschaften während einer längeren Gebrauchsdauer aufweist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß der Halteabschnitt und der Dichtabschnitt aus zwei voneinander abweichenden, an den jeweiligen Anwendungsfall angepaßten PTFE-Compounds bestehen. Bevorzugt besteht der Halteabschnitt aus PTFE und/oder Flourthermoplasten, wie z. B. PFA oder FEP und der Dichtabschnitt besteht aus PTFE oder einem PTFE-Compound. Der Werkstoff für den Halteabschnitt ist auf die statischen Verhältnisse ausgerichtet und gewährleistet eine gute und haltbare Anbindung an der polymeren Zwischenschicht. Die Anbindung kann beispielsweise durch eine Verklebung von Halteabschnitt und Zwischenschicht erfolgen.

Nach einer anderen Ausgestaltung besteht die Möglichkeit, den Lippenring im Formgebungswerkzeug unter Druck und Temperatur während der Vulkanisation des Polymers an die Zwischenschicht anzuformen. Eine haltbare Verbindung des Halteabschnitts mit der vulkanisierten Zwischenschicht ergibt sich durch eine mechanisch-chemische Verbindung.

Der Halteabschnitt kann zwischen einem Radialschenkel und einem Winkelring eingespannt sein.

Bezogen auf den Halteabschnitt hat der Dichtabschnitt völlig andere Aufgaben. Im Gegensatz zur Schaffung einer möglichst haltbaren Verbindung zwischen Halteabschnitt und Stützring, muß der Dichtabschnitt eine einwandfreie Abdichtung des abzudichtenden Mediums während einer langen Gebrauchsdauer sicherstellen. Besteht der Dichtabschnitt aus PTFE oder einem PTFE-Compound, weist dieser sowohl eine hohe Temperatur - als auch eine hohe Medienbeständigkeit bei geringer Reibung auf. Außerdem ist der Dichtabschnitt in radialer Richtung sehr elastisch, um Rundlaufabweichungen und Mittenversatz einer abzudichtenden Welle zu folgen, ohne von der abzudichtenden Fläche abzuheben. Eine Leckage wird auch unter solchen Extrembedingungen sicher vermieden.

Außerdem weist der Dichtabschnitt eine hohe Verschleißfestigkeit auf. Generell besteht der Vorteil eines Zweistoff-PTFE-Dichtrings für Halteabschnitt und Dichtabschnitt darin, daß der jeweilige Werkstoff optimal an den jeweiligen Anwendungsfall angepaßt werden kann, trotzdem, daß der Halteabschnitt und der Dichtabschnitt einstückig ineinander übergehend ausgebildet sind.

Zur Abdichtung von rotierenden Wellen ist der Lippenring radial innenseitig axial in Richtung des abzudichtenden Raums vorgewölbt und umschließt die abzudichtende Welle mit seinem Dichtbereich dichtend.

Die Zwischenschicht kann bei einer Dicke von wenigstens 0,5 mm eine Härte Shore A von 65 bis 85, bevorzugt von 70 bis 80 aufweisen, wobei das Verhältnis aus der Erstreckung der Zwischenschicht in radialer Richtung und der zugehörigen Dicke 3 bis 10 beträgt. Die Zwischenschicht weist bevorzugt eine Dicke von 0,7 bis 3 mm auf.

Durch eine derartige Ausgestaltung der Zwischenschicht vermag der Lippenring radialen Bewegungen des abzudichtenden Bauteils zu folgen, ohne daß er beschädigt wird oder sich von der Zwischenschicht ablöst.

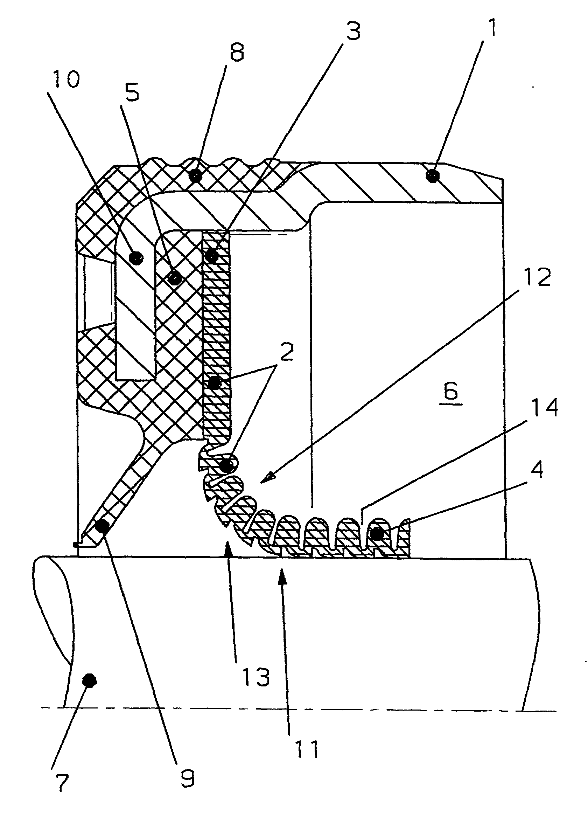

### Kurzbeschreibung der Zeichnung

Ein Ausführungsbeispiel eines erfindungsgemäßen Dichtrings wird nachfolgend anhand der Zeichnung näher beschrieben.

### Ausführung der Erfindung

In der Zeichnung ist ein Dichtring gezeigt, der als Radialwellendichtring ausgebildet ist und im wesentlichen einen Stützring 1, einen Lippenring 2 und eine Zwischenschicht 5 umfaßt. Der Stützring 1 besteht in diesem Ausführungsbeispiel aus einem metallischen Werkstoff, der Lippenring 2 aus einem Zweistoff-PTFE oder aus einem Zweistoff-PTFE-Compound und die Zwischenschicht 5 aus elastomerem oder polymerem Werkstoff, der auch für die statische Dichtung 8 zur Anwendung gelangt. Einstückig und materialeinheitlich mit der statischen Dichtung 8 ist außerdem die Vorschaltdichtung 9 verbunden, wobei die statische Dichtung 8 und die Vorschaltdichtung 9 durch Vulkanisation mit dem Stützring 1 verbunden sind. Die Vorschaltdichtung 9 ist auf der dem abzudichtenden Raum 6 abgewandten Seite des Lippenrings 2 angeordnet und wie bei bekannten Dichtringen mit elastomeren Lippen gestaltet.

Auf der dem abzudichtenden Raum 6 zugewandten Seite des Radialschenkels 10 des Stützrings 1 ist die Zwischenschicht 5 mit dem Halteabschnitt 3 des Lippenrings 2 verbunden. Die radiale Ausdehnung des Halteabschnitts 3 entspricht vorzugsweise der radialen Ausdehnung der Zwischenschicht 5.

Radial innenseitig schließt sich an den Halteabschnitt 3 der Dichtabschnitt 4 an, wobei der Halteabschnitt 3 und der Dichtabschnitt 4 aus zwei voneinander abweichenden, an den jeweiligen Anwendungsfall angepaßten PTFE oder PTFE-Compounds bestehen. In dem hier gezeigten Ausführungsbeispiel besteht der Halteabschnitt 3 aus einem PTFE-Compound. Der Dichtabschnitt 4 besteht demgegenüber aus einem anderen PTFE-Compound.

Die Zwischenschicht 5 ist in diesem Ausführungsbeispiel 2,5 mm dick und hat eine Härte Shore A von 75. Der Halteabschnitt 3 ist nur durch die Zwischenschicht 5 mit dem Radialschenkel 10 des Stützrings 1 verbunden, was nicht nur eine unlösbare Verbindung zwischen beiden Teilen sicherstellt sondern darüber hinaus auch eine gute Dichtigkeit der Übergangszone gewährleistet sowie eine besonders gute Nachgiebigkeit der Dichtlippe beim auftreten radialer Verlagerungen der abzudichtenden Welle 7. Der Dichtabschnitt 4 ist in diesem Ausführungsbeispiel mit einer ersten und einer zweiten Oberflächenprofilierung 11, 12 versehen, wobei die der Welle 7 zugewandte, erste Oberflächenprofilierung 11 sägezahnförmige Ausnehmungen 13 aufweist, die sich vom axial vorgewölbten Bereich des Dichtabschnitts 4 bis zur Zwischenschicht 5 und somit bis zum Halteabschnitt 3 erstrecken. Zwischen jeder der sägezahnförmigen Ausnehmungen 13 ist auf der der Welle 7 abgewandten Seite eine im wesentlichen U-förmige, radial nach außen offene Ausnehmung 14 vorgesehen, durch die die zweite Oberflächenprofilierung 12 gebildet ist. Beide Oberflächenprofilierungen 11, 12 sind in Umfangsrichtung jeweils schraubengangförmig ausgebildet.

Dadurch, daß der Halteabschnitt aus einem anderen PTFE-Compound besteht als der Dichtabschnitt 4, kann der PTFE-eigentümliche Memoryeffekt verstärkt werden, um eine einwandfreie Abdichtung des abzudichtenden Raums 6 zu gewährleisten. Der Dichtabschnitt 4 hat das Bestreben einer langsamen Rückbildung bis zur Wiedererlangung der ursprünglich ebenen, scheibenförmigen Gestalt, wobei dieses Bestreben langfristig erhalten bleibt und bei der Gewährleistung einer ausreichenden Anpressung des Dichtabschnitts 4 an die Oberfläche der abzudichtenden Welle 7 während der gesamten Gebrauchsdauer hilft. Rücksichten auf eine gute Verklebbarkeit des Dichtabschnitt-PTFE-Compounds mit der Zwischenschicht 5 brauchen dabei nicht genommen zu werden genau so wenig, wie Rücksicht auf ein gutes Abdichtungsverhalten des Halteabschnitt-PTFE-Compounds. Die Werkstoffe von Halteabschnitt 3 und Dichtabschnitt 4 sind ihren Aufgaben jeweils optimal angepaßt.

## Patentansprüche

1. Dichtring, umfassend einen Stützring (1) aus zähhartem Werkstoff und einem Lippenring (2) aus PTFE, wobei der Lippenring (2) einen Halteabschnitt (3) und einen Dichtabschnitt (4) aufweist, wobei der Halteabschnitt (3) durch eine Zwischenschicht (5) aus polymerem Werkstoff mit dem Stützring (1) verbunden ist, wobei der Halteabschnitt (3) und der Dichtabschnitt (4) aus zwei voneinander abweichenden, an den jeweiligen Anwendungsfall angepaßten PTFE-Compounds bestehen, wobei die Zwischenschicht (5) bei einer Dicke von wenigsten 0,5 mm eine Härte Shore A von 65 bis 85 aufweist, und wobei das Verhältnis aus der Erstreckung der Zwischenschicht (5) in radialer Richtung und der zugehörigen Dicke 3 bis 5 beträgt.

2. Dichtring nach Anspruch 1, **dadurch gekennzeichnet, daß** die Zwischenschicht (5) eine Dicke von 0,7 bis 3 mm aufweist.

3. Dichtring nach einem der Ansprüche 1 und 2, **dadurch gekennzeichnet, daß** der Lippenring (2) radial innenseitig axial in Richtung des abzudichtenden Raums (6) vorgewölbt ist und mit dem Dichtabschnitt (4) eine abzudichtende Welle (7) umfangsseitig dichtend umschließt.

## Claims

1. A sealing ring, comprising a supporting ring (1) composed of tough material and a lip ring (2) composed of PTFE, the lip ring (2) having a holding portion (3) and a sealing portion (4), the holding portion (3) being connected to the supporting ring (1) by means of an intermediate layer (5) composed of polymeric material, the holding portion (3) and the sealing portion (4) being composed of two PTFE compounds differing from one another and adapted to the respective application, the intermediate layer (5) having, in the case of a thickness of at least 0.5mm, a Shore hardness of A of 65 to 85, and the ratio of the extent of the intermediate layer (5) in the radial direction and the associated thickness being 4 to 5.

2. A sealing ring according to claim 1, **characterized in that** the intermediate layer (5) has a thickness of 0.7 to 3mm.

3. A sealing ring according to either one of claims 1 and 2, **characterized in that** the lip ring (2) is curved forwards radially on the inside axially in the direction of the space (6) to be sealed off and by means of the sealing portion (4) sealingly surrounds circumferentially a shaft (7) to be sealed off.

## Revendications

1. Bague d'étanchéité, comprenant une bague d'appui (1) en matière dure tenace et une bague à lèvres (2) en PTFE, la bague à lèvres (2) présentant une section de maintien (3) et une section d'étanchéité (4), la section de maintien (3) étant reliée par une couche intermédiaire (5) en matière polymère à la bague d'appui (1), la section de maintien (3) et la section d'étanchéité (4) se constituant de deux composés PTFE différents l'un de l'autre, adaptés à l'application spécifique, la couche intermédiaire (5) présentant avec une épaisseur d'au moins 5 mm une dureté Shore A de 65 à 85, et le rapport à partir de l'extension de la couche intermédiaire (5) dans le sens radial et l'épaisseur correspondante étant de 3 à 5.

2. Bague d'étanchéité selon la revendication 1, **caractérisée en ce que** la couche intermédiaire (5) présente une épaisseur de 0,7 à 3 mm.

3. Bague d'étanchéité selon l'une des revendications 1 et 2, **caractérisée en ce que** la bague à lèvres (2) est préalablement bombée axialement du côté intérieur et radialement en direction de l'espace à rendre étanche (6) et entoure par la section d'étanchéité (4) de façon étanche et périphérique un arbre (7) à rendre étanche.
